# EUROPEAN PATENT APPLICATION

(11) **EP 1 865 650 A1**
(43) Date of publication of application: **12.12.2007**
(21) Application number: 06817809.4
(22) Date of filing: 13.11.2006
(51) Int. Cl.: H04L 9/00, H04L 29/06

(54) **A METHOD AND SYSTEM FOR ENCRYPTING AND DECRYPTING THE ON DEMAND STREAM MEDIA DATA IN WMV FORMAT**

(30) Priority: 24.02.2006 CN 200610058201
(71) Applicant: Huawei Technologies Co Ltd, Longgang District, Shenzhen Guangdong 518129 (CN)
(72) Inventor: LI, Yaohui, 518129 Shenzhen Guangdong (CN)
(74) Representative: Körber, Martin Hans
(86) International application number: PCT/CN2006/003039
(87) International publication number: WO 2007/095803

(57) **Abstract**

Methods, an encryptor and a system for encrypting or decrypting WMV on-demand streaming media are disclosed. The encryptor encrypts the WMV on-demand streaming media carried in an ASF file using a content key; a media server send each encrypted packet carrying the WMV on-demand streaming media in the ASF file to a DRM agent; the DRM agent decrypt the encrypted packet carrying the WMV on-demand streaming media. The scheme of encrypting or decrypting the WMV streaming media is enabled in a DRM system based on Open Mobile Alliance specifications and Internet Stream Media Alliance specifications, thus richly diversifying the content providers' choices on the media formats of on-demand streaming media.

## Description

### Field of the Technology

The present invention relates to Digital Rights Management (DRM) technique, and more particularly, to a method and system for encrypting or decrypting Window Media Video (WMV) on-demand streaming media in a DRM system based on Open Mobile Alliance (OMA) specifications and Internet Streaming Media Alliance (ISMA) specifications.

### Background of the Invention

The DRM technique is a new technique developed with the wide spread of streaming media on the Internet. The DRM technique is used to protect the copyright of digital contents and raise pirate technique difficulty and pirate cost. Only a user who bought the license may enjoy the digital content in compliance with copyright regulations.

The streaming media services provided currently mainly include live streaming media services and on-demand streaming media services. For the live streaming media service which is similar to the conventional television program, streaming media is played continuously by a media server. For the on-demand streaming media service, streaming media is sent to a user by a media server when the user hits the linkage of the service.

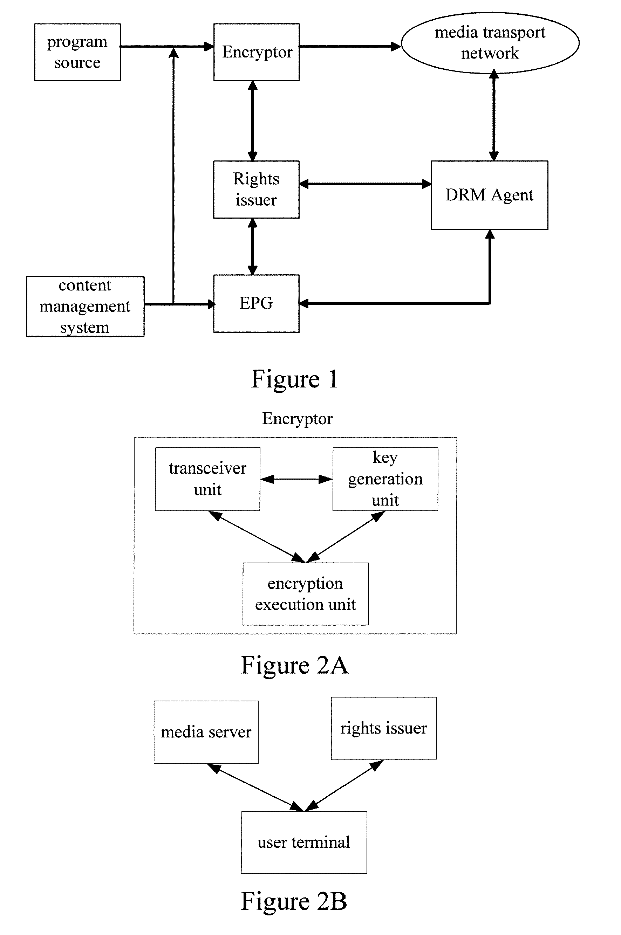

Figure 1 is a block diagram illustrating the structure of a DRM system based on the OMA specifications and the ISMA specifications. Referring to Figure 1, the DRM system based on the OMA specifications and the ISMA specifications has become the focus of discussion on the copyright protection solution in the telecommunication field. In the DRM system, the OMA specifications is adopted in the authorization and the ISMA specifications is adopted in the message bearing and encryption or decryption, and the media format of the live streaming media and on-demand streaming media supported by the DRM system is the Moving Picture Experts Group 4 (MPEG4), i.e., only when the media format of live and on-demand streaming media is the MPEG4, the DRM system based on the OMA specifications and the ISMA specifications can encrypt or decrypt the live and on-demand streaming media, thus protecting the copyright of digital contents.

At present, WMV streaming media is favored by operators and is widely applied for its high compression ratio, high quality, high definition and less bandwidth occupied. For example, the WMV format is widely taken as the media format of live streaming media and on-demand streaming media in the broadband streaming media service provided currently.

The inventor of the present invention found in the inventing process that in the existing solution, when the DRM system based on the OMA specifications and the ISMA specifications is used for encrypting or decrypting streaming media to protect copyright in digital contents, the media format of live streaming media and on-demand streaming media can only be the MPEG4 format and can not be the WMV format, i.e., there is no solution for encrypting or decrypting WMV live streaming media and WMV on-demand streaming media in the DRM system based on the OMA specifications and the ISMA specifications. Therefore, the application of DRM system based on the OMA specifications and the ISMA specifications and the application of WMV live streaming media and WMV on-demand streaming media are limited. The quality of service of the DRM system based on the OMA specifications and the ISMA specifications is low.

### Summary of the Invention

Embodiments of the present invention provide a method for encrypting WMV on-demand streaming media, a method for decrypting WMV on-demand streaming media, an encryptor and a device for decrypting WMV streaming media, to encrypt or decrypt WMV on-demand streaming media in the DRM system based on the OMA specifications and the ISMA specifications.

A method for encrypting Window Media Video, WMV, streaming media, includes: acquiring, by an encryptor, an Advanced Systems Format, ASF, file with WMV on-demand streaming media, and generating a content key; and encrypting, by the encryptor, the WMV on-demand streaming media in the ASF file using the content key.

A method for decrypting Window Media Video, WMV, streaming media, includes: sending, by a media server, a rights issuer identifier included in an Advanced Stream Format, ASF, file to a Digital Rights Management, DRM, Agent; acquiring, by the DRM Agent, a content key from a rights issuer according to the rights issuer identifier; carrying, by the media server, each encrypted packet with WMV on-demand streaming media in the ASF file and the encryption information for the encrypted packet respectively in each Real Time Protocol, RTP, message and sending the RTP message to the DRM Agent; and decrypting, by the DRM Agent, each encrypted packet with WMV on-demand streaming media respectively according to the content key and the encryption information included in each RTP message.

An encryptor includes: a transceiver unit, configured to receive an Advanced Stream Format, ASF, file with WMV on-demand streaming media; a key generation unit, configured to generate a content key; and an encryption execution unit, configured to encrypt the Window Media Video, WMV, on-demand streaming media within the ASF file received by the transceiver unit using the content key generated by the key generation unit.

A system for decrypting Window Media Video, WMV, streaming media, includes: a rights issuer, a media server, configured to send the rights issuer identifier included in the ASF file, and carry each encrypted packet with WMV on-demand streaming media and the encryption information of the encrypted packet respectively in each Real Time Protocol, RTP, message and send the RTP message; and a user terminal, configured to acquire a content key from the rights issuer according to the rights issuer identifier sent by the media server, and decrypt respectively each encrypted packet with WMV on-demand streaming media according to the content key and the encryption information carried in each RTP message sent by the media server.

It can be seen from the scheme described above that the WMV on-demand streaming media can be encrypted or decrypted in the existing DRM system based on the OMA specifications and the ISMA specifications, so the content providers' choices on the media formats of on-demand streaming media are increased, and the quality of service of the DRM system based on the OMA specifications and the ISMA specifications is improved.

### Brief Description of the Drawings

Figure 1 is a block diagram illustrating the structure of a DRM system based on OMA specifications and ISMA specifications.
Figure 2A is a block diagram illustrating the internal structure of an encryptor for encrypting WMV on-demand streaming media according to an embodiment of the present invention.
Figure 2B is a block diagram illustrating the structure of a system for decrypting WMV on-demand streaming media according to an embodiment of the present invention.
Figure 2C is a flowchart illustrating the process for encrypting WMV on-demand streaming media according to an embodiment of the present invention.
Figure 3 is a flowchart illustrating the process for decrypting WMV on-demand streaming media according to an embodiment of the present invention.
Figure 4 is a flowchart illustrating the process for encrypting or decrypting WMV on-demand streaming media according to an embodiment of the present invention.

### Detailed Description of the Invention

An embodiment of the present invention provides a method for encrypting Window Media Video (WMV) on-demand streaming media. In the method for encrypting, an encryptor acquires an Advanced Systems Format (ASF) file with WMV on-demand streaming media, and generates a content key. The encryptor encrypts WMV on-demand streaming media included in the ASF file by using the content key generated.

An embodiment of the present invention provides a method for decrypting WMV on-demand streaming media. In the method for decrypting, a media server sends a rights issuer identifier included in the ASF file to a Digital Rights Management (DRM) Agent (an copyright agent of a user terminal). The DRM Agent acquires a content key from a rights issuer according to the rights issuer identifier. The media server carries each of a plurality of encrypted data packets with WMV on-demand streaming media and the encryption information of each of the plurality of encrypted data packets in each of a plurality of Real Time Protocol (RTP) messages respectively, and sends the plurality of RTP messages to the DRM Agent. The DRM Agent decrypts each of the plurality of encrypted data packets with WMV on-demand streaming media according to the encryption information carried in each of the plurality of RTP messages and the content key.

An embodiment of the present invention also provides an encryptor for encrypting WMV on-demand streaming media. The structure of the encryptor is shown in Figure 2A. Referring to Figure 2A, the encryptor includes a transceiver unit, a key generation unit and an encryption execution unit. The transceiver unit is configured to receive the ASF file with WMV on-demand streaming media. The key generation unit is configured to generate a content key. The encryption execution unit is configured to encrypt the WMV on-demand streaming media in the ASF file received by the transceiver unit using the content key generated by the key generation unit.

An embodiment of the present invention also provides a system for decrypting WMV on-demand streaming media. The structure of the system is shown in Figure 2B. Referring to Figure 2B, the system includes a rights issuer, a media server and a user terminal. The media server is configured to send a rights issuer identifier included in the ASF file to the user terminal, and carry each of a plurality of encrypted data packets with WMV on-demand streaming media and the encryption information of each of the plurality of encrypted data packets in each of a plurality of RTP messages respectively, and send the plurality of RTP messages to the user terminal. The user terminal is configured to acquire a content key from the rights issuer according to the rights issuer identifier, and decrypt each of the plurality of encrypted data packets with WMV on-demand streaming media according to the encryption information carried in each of the plurality of RTP messages and the content key.

The present invention is hereinafter further described in detail with reference to the accompanying drawings as well as embodiments to make the technical solution and merits thereof more apparent.

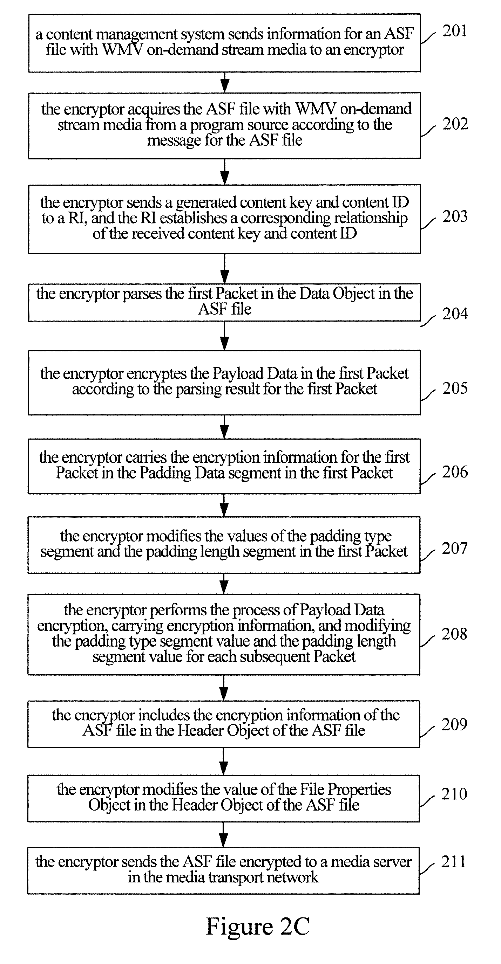

Figure 2C is a flowchart illustrating the process for encrypting WMV on-demand streaming media according to an embodiment of the present invention. Referring to Figure 2A, Figure 2B and Figure 2C, the process for encrypting WMV on-demand streaming media in a DRM system based on the OMA specifications and the ISMA specifications includes the following blocks.

Block 201: A content management system sends information for an ASF file with WMV on-demand streaming media to an encryptor.

The information for the ASF file may include the name and location of the ASF file.

The content management system may send the information for the ASF file via an existing program message.

Block 202: The encryptor acquires the ASF file with WMV on-demand streaming media from a program source according to the information for the ASF file.

The ASF file acquired by the encryptor mainly includes a Header Object, a Data Object, and a Simple Index Object.

The Header Object includes a File Properties Object mainly used for describing the size and creation date of the ASF file, the number of Packets in the ASF file, the maximum Packet length, the minimum Packet length, and the program time duration etc.

The Data Object includes a series of Packets. Each Packet includes Error Correct Data, Payload Parsing Information, Payload Data, and Padding Data.

The Payload Data carries WMV on-demand streaming media. The Payload Parsing Information includes a Multiple Payloads Present segment. The Multiple Payloads Present segment describes whether the Payload Data is Single Payload data or Multiple Payload data. If the Payload Data is the Single Payload data, the Payload Data carries one data packet with WMV on-demand streaming media. If the Payload Data is the Multiple Payload data, the Payload Data carries a plurality of Single Payloads, i.e., the Multiple Payload data carries a plurality of data packets with WMV on-demand streaming media. The Payload Parsing Information also includes a Padding Length type segment and a Padding Length segment to describe the length of the Padding Data in the Packet.

The Simple Index Object is used for simple positioning of the ASF file.

Block 203: The encryptor generates a content key and a content identifier (ID), and sends the content key and content ID to a rights issuer. The rights issuer establishes a corresponding relationship of the content key and content ID.

Block 204: The encryptor parses a first Packet in the Data Object in the ASF file.

In the process for the parsing, the encryptor parses the Multiple Payloads Present segment in Payload Parsing Information in the first Packet.

If the value of the Multiple Payloads Present segment parsed is Single Payload data, the Payload Data in the first Packet is Single Payload data, i.e., the Payload Data in the first Packet only carries one data packet with WMV on-demand streaming media.

If the value of the Multiple Payloads Present segment parsed is Multiple Payload data, the Payload Data in the first Packet is Multiple Payload data, i.e., the Payload Data in the first Packet carries a plurality of data packets with WMV on-demand streaming media.

Block 205: The encryptor encrypts the Payload Data in the first Packet according to the parsing result of the first Packet.

If the parsing result indicates that the Payload Data in the first Packet is Single Payload data, the encryptor generates an initial vector (IV), for example, IV0, and encrypts the one data packet with WMV on-demand streaming media carried in the Payload Data using the IV0 and the content key generated in block 203;

If the parsing result indicates that the Payload Data in the first Packet is Multiple Payload data, the encryptor generates a plurality of IVs according to the number of data packets with WMV on-demand streaming media, and encrypts each of the plurality of data packets with WMV on-demand streaming media respectively using each of the plurality of IVs and the content key generated in block 203. For example, the encryptor generates an IV, for example, IV1, for a first data packet with WMV on-demand streaming media included in the Payload Data, and encrypts the first data packet with WMV on-demand streaming media using the IV1 and the content key generated in block 203, then generates another IV, for example, IV2, for a second data packet with WMV on-demand streaming media in the Payload Data, and encrypts the second data packet with WMV on-demand streaming media using the IV2 and the content key generated in block 203, repeats until generating a last IV for a last data packet with WMV on-demand streaming media in the Payload Data and encrypt the last data packet with WMV on-demand streaming media in the Payload Data.

Block 206: The encryptor carries the encryption information for the first Packet in the Padding Data segment in the first Packet.

The encryption information includes the IV for encrypting the one data packet with WMV on-demand streaming media or the plurality of IVs for encrypting the plurality of data packets with WMV on-demand streaming media, and may further include an encryption identifier, and key indication information of the content key for encrypting the one data packets with WMV on-demand streaming media or the plurality of data packets with WMV on-demand streaming media. The encryptor may carry the encryption information at the end of the Padding Data segment.

It should be noted that in an ASF file, if the Payload Data in the Packet is Single Payload data, i.e., the Payload Data only carries one data packet with WMV on-demand streaming media, all the Padding Data segment in the Packet is located following the data packet with WMV on-demand streaming media. If the Payload Data in the Packet is Multiple Payload data, i.e., the Payload Data carries a plurality of data packets with WMV on-demand streaming media, the Padding Data segment in the Packet is distributed to follow each of the plurality of data packet with WMV on-demand streaming media in the Payload Data, i.e., each of the plurality of data packets with WMV on-demand streaming media in the Payload Data is followed closely by a portion of Padding Data segment.

In details, if the Payload Data in the first Packet is Single Payload data, the encryptor carries the encryption information of the one data packet with WMV on-demand streaming media in the Payload Data segment in the first Packet, for example, carries the IV0 for encrypting at the end of the Padding Data segment.

If the Payload Data in the first Packet is Multiple Payload data, the encryptor carries the encryption information for a first data packet with WMV on-demand streaming media in the Padding Data segment following closely the first data packet with WMV on-demand streaming media data. For example, the encryptor carries the IV 1 for encrypting the first data packet with WMV on-demand streaming media at the end of the Padding Data segment following closely the first data packet with WMV on-demand streaming media. The encryptor carries the encryption information for a second data packet with WMV on-demand streaming media in the Padding Data segment following closely the second data packet with WMV on-demand streaming media. For example, the encryptor carries the IV2 for encrypting the second data packet with WMV on-demand streaming media at the end of the Padding Data segment following closely the second data packet with WMV on-demand streaming media; repeats until the encryption information for the last data packet with WMV on-demand streaming media is carried in the Padding Data segment following closely a last data packet with WMV on-demand streaming media.

Block 207: The encryptor modifies the values of the padding type segment and the padding length segment in the first Packet, according to the length of all the current Padding Data segments in the first Packet.

The encryption information for the Payload Data in the first Packet is carried in the Padding Data segment in the first Packet, i.e., the length of the Padding Data segment in the first Packet is changed, so the modifying process is needed to make the values of the padding type segment, and the padding length segment in the first Packet reflects the actual length of the Padding Data segment.

Block 208: The encryptor parses the subsequent Packets in the Data Object one by one, and performs the process for Payload Data encrypting, carrying encryption information, and modifying the padding type segment value and the padding length segment value for each subsequent Packet.

The principle of the implementation in block 208 is similar to that in blocks 204-207. In another word, for each subsequent Packet in the Data Object, blocks 204-207 are needed to be performed.

Block 209: The encryptor carries the encryption information for the ASF file in the Header Object of the ASF file.

The encryption information for the ASF file includes the encryption identifier, an encryption algorithm, the key indication information of the content key for encryption, the content ID, the rights issuer identifier.

The encryptor may carry the encryption information of the ASF file at the end of the Header Object of the ASF file.

Block 210: The encryptor modifies the value of the File Properties Object in the Header Object of the ASF file according to the current length of the ASF file.

The File Properties Object describes the length of the ASF file. In this embodiment, the Padding Data segment in Packet includes the encryption information for the Packet, and the Header Object includes the encryption information for the ASF file, i.e., the length of the ASF file is changed. Therefore in this block, the encryptor modifies the value of the File Properties Object in the Header Object of the ASF file according to the current length of the ASF file to make the File Properties Object reflect the current length of the ASF file.

Block 211: The encryptor sends the encrypted ASF file to a media server in the media transport network.

It should be noted that, in the process shown in Figure 2C, the encryptor selects, according to the order of the data packets in the Data Object, the Packet one by one and encrypts the Payload Data in each Packet. In practice, the encryptor may select, according to other rules instead of the order of the data packets in the Data Object, the Packet and encrypt the Payload Data in each Packet.

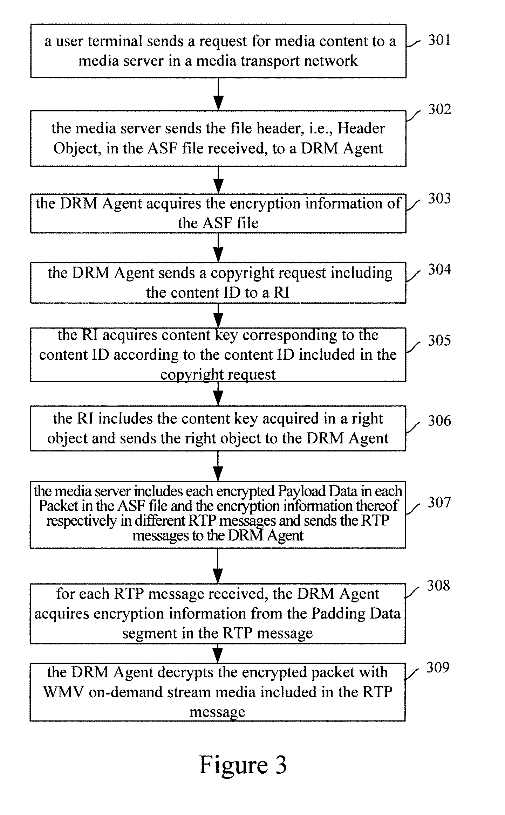

Figure 3 is a flowchart illustrating the process for decrypting WMV on-demand streaming media according to an embodiment of the present invention. Referring to Figure 2A, Figure 2B, Figure 2C and Figure 3, the process for decrypting WMV on-demand streaming media in DRM system based on the OMA specifications and the ISMA specifications includes the following blocks.

Block 301: A user terminal sends a request for media content of the WMV on-demand streaming media to a media server in a media transport network.

The user terminal sends the request for media content to trigger the establishment of the session connection between the user terminal and the media server.

Block 302: The media server sends the file header, i.e., Header Object, in an ASF file received, to a DRM Agent in the user terminal.

The media server may send a media content response including the file header, i.e., Header Object, in the ASF file received, to the DRM Agent.

Block 303: The DRM Agent parses the Header Object in the ASF file, and acquires the encryption information for the ASF file.

For example, suppose that the encryption information for the ASF file is carried at the end of the Header Object of the ASF file by the encryptor. In this block, the DRM Agent acquires the encryption information for the ASF file from the end of the Header Object of the ASF file, i.e., acquires the encryption identifier, the encryption algorithm for encryption, the key indication information, the content ID and the rights issuer identifier.

After acquiring the encryption information for the ASF file, the DRM Agent determines, according to the encryption identifier that, the WMV on-demand streaming media is encrypted. It means that a decryption process is needed.

Block 304: The DRM Agent sends a copyright request including the content ID to a rights issuer according to the rights issuer identifier in the encryption information for the ASF file.

Block 305: The rights issuer acquires the content key corresponding to the content ID according to the content ID included in the copyright request.

Block 306: The rights issuer sends a rights object including the content key to the DRM Agent.

If multiple content keys are included in the rights object, in this block, the content key needs to be selected by the DRM Agent from the multiple content keys according to the key indication information. The multiple content keys are sent by the rights issuer. The key indication information is carried in the encryption information for the ASF file.

After the session connection between the user terminal and the media server is established successfully, the user terminal requests the media server to send media data.

Block 307: The media server carries each encrypted Payload Data in each Packet in the ASF file and the encryption information for each Packet respectively in different RTP messages and sends the RTP messages to the DRM Agent.

For each Packet in the ASF file, if the Payload Data in the Packet is Single Payload data, the media server carries the only one encrypted data packet with WMV on-demand streaming media in the Packet and the Padding Data following closely the encrypted data packet in a RTP message, and sends the RTP message to the DRM Agent. If the Payload Data in the Packet is Multiple Payload data, the media server carries a plurality of encrypted data packets with WMV on-demand streaming media in the Payload Data in the Packet and the corresponding Padding Data following closely with the encrypted data packet in a plurality of RTP messages respectively, and sends the plurality of RTP messages to the DRM Agent. For example, the Payload Data in a Packet includes three encrypted data packets with WMV on-demand streaming media, and the two encrypted data packets each is followed closely by a portion of the Padding Data, then the media server carries the first encrypted data packet with WMV on-demand streaming media in the Payload Data and the Padding Data following closely the first encrypted data packet in a first RTP message, and sends the first RTP message to the DRM Agent; carries the second encrypted data packet with WMV on-demand streaming media in the Payload Data and the Padding Data following closely the second encrypted data packet in a second RTP message, and sends the second RTP message to the DRM Agent.

Block 308: The DRM Agent parses each of the RTP messages received, and acquires encryption information from the Padding Data segment in each of the RTP messages.

The encryption information acquired by the DRM Agent includes an IV, and may further include the encryption identifier and the content key.

Block 309: The DRM Agent decrypts the encrypted data packet with WMV on-demand streaming media carried in each of the RTP messages according to the IV and the content key to acquire the original WMV on-demand streaming media.

It should be noted that, if multiple content keys are received by the DRM Agent, the content key for decryption in this block is selected by the DRM Agent from the multiple content keys according to the key indication information.

In addition, the encryption information is carried in the Padding data segment, the DRM Agent may clears the Padding data segment in each of the RTP messages after the decryption is completed, so that the encryption information carried in the Padding data segment would not be taken as effective data.

Thus, the process for decrypting the WMV on-demand streaming media carried in the RTP messages is completed. The DRM Agent may send all decrypted WMV on-demand streaming media to a media player in the user terminal, and the media player plays the WMV on-demand streaming media.

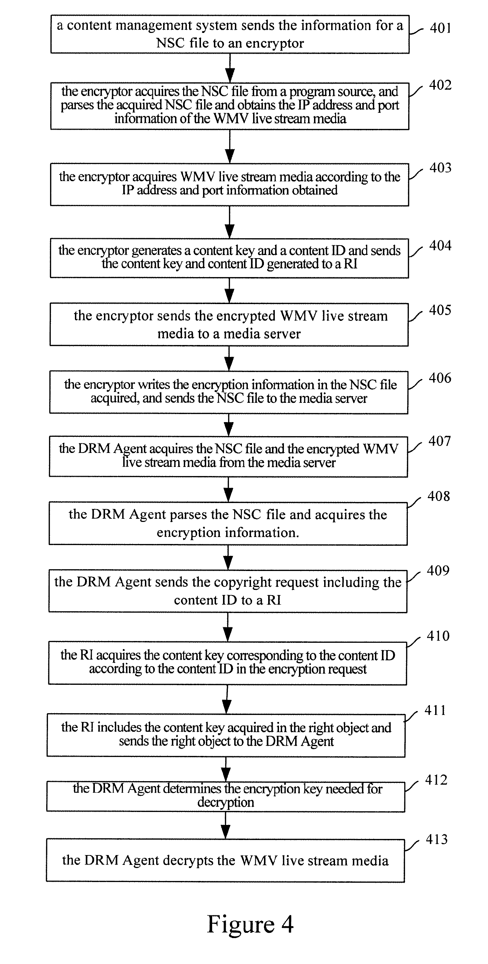

Figure 4 is a flowchart illustrating the process for encrypting and decrypting WMV live streaming media according to an embodiment of the present invention. Referring to Figure 1 and Figure 4, the process for encrypting and decrypting WMV live streaming media may further implemented in accordance with the embodiment of the present invention, the process includes the following blocks.

Block 401: A content management system sends the information for a NSC file to an encryptor.

The information for the NSF file may include the name and location of the NSC file.

The content management system may send the information for the NSC file to the encryptor via the existing program message.

Block 402: The encryptor acquires the NSF file from a program source according to the information for the NSC file received, parses the NSC file and obtains the IP address and port information of the WMV live streaming media.

Block 403: The encryptor acquires WMV live streaming media according to the IP address and port information.

Block 404: The encryptor generates a content key and a content ID and sends the content key and the content ID to a rights issuer. The rights issuer establishes a corresponding relationship of the content key and the content ID.

Block 405: The encryptor encrypts the WMV live streaming media using the content key, and sends the encrypted WMV live streaming media to a media server in a media transport network.

It should be noted that, the WMV live streaming media is carried via a RTP message, so the encryption may be independent with the media format. Therefore, in this block, the process for encrypting the WMV live streaming media by the encryptor is completely similar to the process for encrypting the MGEG4 live streaming media by the encryptor in the existing solution.

Block 406: The encryptor writes the encryption information in the NSC file, and sends the NSC file to the media server in the media transport network.

The encryption information includes the encryption identifier, the encryption algorithm for encryption, the key indication information, the content ID and the rights issuer identifier.

Block 407: The DRM Agent acquires the NSC file and the encrypted WMV live streaming media from the media server.

Block 408: The DRM Agent parses the NSC file and acquires the encryption information.

After acquiring the encryption information for WMV live streaming media, the DRM Agent determines, according to the encryption identifier included in the encryption information, that the WMV live streaming media is encrypted. It means that a decryption process will be needed.

Block 409: The DRM Agent sends a copyright request including the content ID to a rights issuer according to the rights issuer identifier included in the encryption information.

Block 410: The rights issuer acquires the content key corresponding to the content ID according to the content ID in the encryption request.

Block 411: The rights issuer carries the content key in the rights object and sends the rights object to the DRM Agent.

Block 412: The DRM Agent determines a decryption key needed for decryption from the content key sent by the rights issuer according to the key indication information in the encryption information.

Block 413: The DRM Agent decrypts the WMV live streaming media according to the decryption key and a decryption algorithm in the encryption information.

The WMV live streaming media is carried via a RTP message, so the process for decrypting may be independent with the media format, and the process for decrypting the acquired WMV live streaming media by the DRM Agent decrypts in this block is completely similar to the process for decrypting the MGEG4 live streaming media in the prior art.

Thus, the process for decrypting the WMV live streaming media carried in the RTP message is completed. The DRM Agent may send all decrypted WMV live streaming media to a media player in the user terminal, and the media player in the user terminal plays the WMV live streaming media.

It should be appreciated that the foregoing is only preferred embodiments of the present invention and is not for use in limiting the protection scope thereof. Any modification, equivalent substitution, improvement within the spirit and principle of the invention should be covered in the protection scope of the invention.

## Claims

1. A method for encrypting Window Media Video, WMV, streaming media, comprising:
acquiring, by an encryptor, an Advanced Systems Format, ASF, file with WMV on-demand streaming media, and generating a content key; and
encrypting, by the encryptor, the WMV on-demand streaming media in the ASF file using the content key.

2. The method of claim 1, wherein the acquiring by an encryptor the ASF file comprises:
sending, by a content management system, a name and location of the ASF file with the WMV on-demand streaming media to the encryptor; and
acquiring, by the encryptor, the ASF file with the WMV on-demand streaming media from a program source according to the name and location of the ASF file.

3. The method of claim 1, wherein the encrypting the WMV on-demand streaming media in the ASF file comprises:
parsing, by the encryptor, each Packet in a Data Object of the ASF file respectively, and
encrypting Payload data with WMV on-demand streaming media in each Packet using the content key respectively according to the parsing result.

4. The method of claim 3, wherein the encrypting the WMV on-demand streaming media comprises:
selecting, by the encryptor, a Packet with Payload data not encrypted from Packets in the Data Object of the ASF file;
parsing, by the encryptor,a Multiple Payloads Present segment within Payload Parsing Information of the Packet selected;
determining, by the encryptor, whether the value of the Multiple Payloads Present segment parsed is Single Payload data or Multiple Payload data;
generating, by the encryptor, an initial vector, IV, and encrypting the one data packet with WMV on-demand streaming media in the Payload Data of the Packet selected using the IV and the content key, if the value of the Multiple Payloads Present segment parsed is Single Payload data;
generating, by the encryptor, a plurality of IVs according to the number of data packets with WMV on-demand streaming media in the Payload Data of the Packet selected, and encrypting each of a plurality of data packets with WMV on-demand streaming media respectively using one of the plurality of IVs and the content key, if the value of the Multiple Payloads Present segment parsed is Multiple Payload data;
repeatedly performing the selecting a Packet with the Payload data not encrypted to the encryption, until all Packets in Data Object in the ASF file is selected and the encryption is completed.

5. The method of claim 4, further comprising:
carrying encryption information for the one data packet with WMV on-demand streaming media in the Padding Data segment in the Packet selected, if the value of the Multiple Payloads Present segment parsed is Single Payload data;
carrying encryption information for each of the plurality of data packets with WMV on-demand streaming media respectively in each Padding Data segment following each of the plurality of data packets, if the value of the Multiple Payloads Present segment parsed is Multiple Payload data.

6. The method of claim 5, wherein the encryption information comprises: the IV for encrypting the data packet with WMV on-demand streaming media.

7. The method of claim 6, wherein the encryption information further comprises:
an encryption identifier and key indication information.

8. The method of claim 5, wherein the carrying the encryption information in the Padding Data segment comprises:
carrying, by the encryptor, the encryption information at the end of the Padding Data segment.

9. The method of claim 5, further comprising:
sending the content key to a rights issuer;
carrying a rights issuer identifier in Header Object of the ASF file, and sending the ASF file to a media server;
sending, by the media server, the rights issuer identifier included in the Header Object in the ASF file to a DRM Agent, upon receiving a media content request;
sending, by the DRM Agent, a copyright request to a rights issuer according to the received rights issuer identifier;
sending, by the rights issuer, the content key to the DRM Agent;
sending, by the media server, different Real Time Protocol (RTP) messages respectively including each encrypted packet with WMV on-demand streaming media in the ASF file and the encryption information of the encrypted packet to the DRM Agent; and
encrypting respectively, by the DRM Agent, each encrypted packet with WMV on-demand streaming media in each RTP message according to the content key and the encryption information carried in each RTP message to acquire the original WMV on-demand streaming media.

10. The method of claim 9, wherein multiple content keys are generated and sent to the rights issuer;
the carrying the rights issuer identifier in the Header Object of the ASF file further comprises:
carrying the key indication information of the content key in the Header Object of the ASF file; and
the sending the rights issuer identifier to the DRM Agent further comprises:
sending the key indication information included in the Header Object of the ASF file to the DRM Agent; wherein the content key for decrypting by the DRM Agent is selected by the DRM Agent according to the key indication information from all content keys sent by the rights issuer..

11. The method of any claim from claim 1 to 10, further comprising:
acquiring, by the encryptor, an NSC file from a program source according to information for the NSC file sent by a content management system;
acquiring, by the encryptor, WMV live streaming media according to IP address and port information of the WMV live streaming media included in the NSC file;
encrypting, by the encryptor, the WMV live streaming media acquired, and carrying encryption information in the NSC file and sending the NSC file to a media server;
sending, by the media server, the NSC file to a DRM Agent; and
parsing, by the DRM Agent, the NSC file to acquire the encryption information, and decrypting the WMV live streaming media encrypted according to the encryption information acquired.

12. A method for decrypting Window Media Video, WMV, streaming media, comprising:
sending, by a media server, a rights issuer identifier included in an Advanced Systems Format, ASF, file to a Digital Rights Management, DRM, Agent;
acquiring, by the DRM Agent, a content key from a rights issuer according to the rights issuer identifier;
carrying, by the media server, each encrypted packet with WMV on-demand streaming media in the ASF file and the encryption information for the encrypted packet respectively in each Real Time Protocol, RTP, message and sending the RTP message to the DRM Agent; and
decrypting, by the DRM Agent, each encrypted packet with WMV on-demand streaming media respectively according to the content key and the encryption information included in each RTP message.

13. The method of claim 12, further comprising:
receiving, by the media server, a media content request for the WMV on-demand streaming media before sending the rights issuer identifier included in an ASF file to a DRM Agent.

14. The method of claim 12, wherein sending the rights issuer identifier included in the ASF file to the DRM Agent comprises:
sending, by the media server, a Header Object including rights issuer identifier in the ASF file to the DRM Agent; and parsing, by the DRM Agent, the Header Object received to acquire the rights issuer identifier.

15. The method of claim 12, wherein the carrying each encrypted packet with WMV on-demand streaming media in the ASF file and the encryption information of the encrypted packet respectively in each RTP message and sending the RTP message to the DRM Agent comprises:
carrying, by the media server, each encrypted packet in the ASF file and the Padding Data following the encrypted packet respectively in different RTP messages and sending the RTP messages to the DRM Agent, wherein the Padding Data includes the IV for encryption; and
the decrypting comprises:
parsing, by the DRM Agent, the Padding Data in any RTP message received to acquire the IV; decrypting the Payload data in the RTP message according to the content key received and the IV acquired; repeatedly performing the parsing action and the decrypting action in this process until the encryption of Payload data in all RTP massages is completed.

16. The method of claim 12, wherein the sending the rights issuer identifier included in the ASF file to the DRM Agent further comprises:
sending, by the media server, the key indication information for encryption to the DRM Agent;
the acquiring the content key from the rights issuer further comprises:
selecting a content key from all content keys by the DRM Agent according to the key indication information received; wherein the content key for the DRM Agent to decrypt is selected from all content keys if the number of the content keys acquired by the DRM Agent is greater than one.

17. The method of any claim from claim 12 to 16, further comprising:
acquiring the NSC file from a program source by the encryptor according to information for the NSC file sent by a content management system;
acquiring WMV live streaming media b y the encryptor according to the IP address and port information of the WMV live streaming media included in the NSC file;
encrypting the acquired WMV live streaming media by the encryptor, and carrying the encryption information in the NSC file and sending the NSC file to the media server;
sending, by the media server, the NSC file to a DRM Agent; and
parsing, by the DRM Agent, the NSC file to acquire encryption information, and decrypting the encrypted WMV live streaming media according to the encryption information acquired.

18. An encryptor, comprising:
a transceiver unit, configured to receive an Advanced Stream Format, ASF, file with WMV on-demand streaming media;
a key generation unit, configured to generate a content key; and
an encryption execution unit, configured to encrypt the Window Media Video, WMV, on-demand streaming media within the ASF file received by the transceiver unit using the content key generated by the key generation unit.

19. The encryptor of claim 18, wherein the encryption execution unit parses each Packet in the Data Object in the ASF file re ceived by the transceiver unit, and respectively encrypts, according to the parsing result, the Payload data with WMV on-demand streaming media in each Packet using the content key generated by the key generation unit.

20. The encryptor of claim 18, wherein the key generation unit is further configured to send the content key generated to the transceiver unit;
the encryption execution unit is further configured to send the encrypted WMV on-demand streaming media to the transceiver unit; and
the transceiver unit is further configured to send the content key received to a rights issuer in the network, and send the WMV on-demand streaming media received and encrypted to the media server in the network.

21. A system for decrypting Window Media Video, WMV, streaming media, comprising:
a rights issuer,
a media server, configured to send the rights issuer identifier included in the ASF file, and carry each encrypted packet with WMV on-demand streaming media and the encryption information of the encrypted packet respectively in each Real Time Protocol, RTP, message and send the RTP message; and
a user terminal, configured to acquire a content key from the rights issuer according to the rights issuer identifier sent by the media server, and decrypt respectively each encrypted packet with WMV on-demand streaming media according to the content key and the encryption information carried in each RTP message sent by the media server.

22. The system of claim 21, wherein the media service is further configured to include each encrypted packet and the Padding Data following the encrypted packet respectively in different RTP messages and send the RTP messages to the user terminal, wherein the Padding Data includes the Initial Vector, IV, for encryption; and
the user terminal is further configured to parse the Padding Data in each RTP message to acquire the IV, and decrypt the Payload data in the RTP message according to the content key received and the IV acquired.
